(19) Europäisches Patentamt / European Patent Office / Office européen des brevets

(11) **EP 2 945 809 B1**

(12) **FASCICULE DE BREVET EUROPEEN**

(45) Date de publication et mention de la délivrance du brevet:
**25.11.2020 Bulletin 2020/48**

(21) Numéro de dépôt: **14703439.1**

(22) Date de dépôt: **20.01.2014**

(51) Int Cl.:
**B60B 21/12** *(2006.01)*   **B62M 1/10** *(2010.01)*
**B60B 7/06** *(2006.01)*   **B60B 25/00** *(2006.01)*
**B60B 1/00** *(2006.01)*   **B60B 7/00** *(2006.01)*

(86) Numéro de dépôt international:
**PCT/IB2014/058415**

(87) Numéro de publication internationale:
**WO 2014/111899 (24.07.2014 Gazette 2014/30)**

(54) **ÉQUIPEMENT POUR UNE ROUE D'UNE BICYCLETTE ET JANTE CORRESPONDANTE**

VORRICHTUNG FÜR FAHRRADRÄDER UND ENTSPRECHENDE FELGE

DEVICE FOR A BICYCLE WHEEL AND CORRESPONDING WHEEL RIM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.01.2013 FR 1350435**

(43) Date de publication de la demande:
**25.11.2015 Bulletin 2015/48**

(73) Titulaire: **DIAMANT WHEELS S.r.l.**
**Frazione Bonferraro, Sorga (IT)**

(72) Inventeurs:
• **MEZADOURIAN, Gérard**
  **F-13120 Gardanne (FR)**
• **ZECCHETTO, Federico**
  **I-37060 Sorga' (IT)**

(74) Mandataire: **Boggio, Luigi et al**
**Studio Torta S.p.A.**
**Via Viotti, 9**
**10121 Torino (IT)**

(56) Documents cités:
| | |
|---|---|
| EP-A2- 0 808 728 | CN-Y- 201 385 544 |
| DE-A1- 4 416 796 | DE-A1-102010 034 500 |
| DE-U1- 8 912 607 | FR-A- 727 466 |
| FR-A- 735 976 | FR-A- 781 971 |
| JP-A- 2008 013 158 | JP-A- 2008 127 001 |
| JP-A- 2009 298 394 | US-A- 2 272 801 |
| US-A- 3 237 965 | US-A- 5 061 013 |
| US-A- 5 246 275 | US-A1- 2007 200 422 |
| US-A1- 2008 174 166 | US-A1- 2008 174 168 |
| US-A1- 2009 179 480 | |

## Description

DOMAINE TECHNIQUE

La présente invention se réfère à un équipement pour une roue d'une bicyclette comme indiqué ci-dessus.

TECHNIQUE ANTÉRIEURE

Comme tout le monde sait, le rendement d'un cycliste est lié à différents facteurs :

1 - à la puissance développée, à la fois par le couple lors du pédalage, et par la capacité de la part du cycliste de créer un mouvement rotatif élevé en utilisant un rapport de transmission moyen ;
2 - à la position aérodynamique du cycliste qui permet de diminuer les forces de frottement et d'avoir une meilleure pénétration dans l'air ; et
3 - aux différents éléments mécaniques qui composent la bicyclette : ils doivent être de bonne qualité pour faciliter leur mouvement et le freinage.

Il est à rappeler qu'en montagne, le poids représente un facteur important en raison de l'action de la gravité sur l'ensemble constitué de la bicyclette et du cycliste. Le confort est apprécié, notamment, sur les longues distances, car il rend l'effort physique plus supportable. Une bonne rigidité fournie par la structure permet un transfert d'énergie du cycliste aux roues de la bicyclette avec un bon rendement. Cependant, il est communément connu qu'une rigidité excessive influence négativement les capacités physiques du cycliste.

Par conséquent, le rendement du cycliste est dû à un adroit dosage de l'ensemble des susdits facteurs.

De plus, la répartition des masses et des appuis conditionne la tenue de la roue et la stabilité de cette dernière.

Le rendement de la bicyclette d'aujourd'hui est très élevé, dans le sens où 97 % de la puissance développée par le cycliste est utilisée pour la propulsion du vélocipède. Cependant, il est possible de penser que les bicyclettes actuellement disponibles ne permettent pas au cycliste d'utiliser, pour le déplacement de la bicyclette, toute l'énergie dont il dispose.

Si l'on prend en considération, par exemple, la transmission du mouvement, par l'intermédiaire d'une chaîne, à la roue arrière au moyen de la rotation du disque du pédalier, une rotation qui est elle-même réalisée par le mouvement alterné des jambes du cycliste, le problème n'est pas d'augmenter le rendement de cette transmission, qui, comme il a été précédemment dit, est déjà de 97 % environ, mais d'éviter que ce rendement ne diminue de façon draconienne lors la variation des conditions du parcours.

Les documents FR-A-735 976, US-A-2 272 801, DE-A-4 416 796, US-A-2008/0174166, DE-A-10 2010 034500, EP-A-0 808 728, DE-U-89 12 607, US-A-5 246 275, CN-Y-201 385 544, US-A-2007/200422, US-A-2008/0174168, JP-A-2008 127001, US-A-2009/179480 (voir allinéa [0002] - allinéa [0013] ; figures 1, 2) décrivent l'état de la technique pertinent.

Deux lignes de recherche semblent actuellement possibles :

1 - Concevoir un pédalier qui utilise au maximum l'énergie développée pendant le pédalage effectué par le cycliste. C'est, par exemple, l'objectif que les adeptes du pédalier ovalisé se sont donné. Ce pédalier a été conçu pour faciliter le passage des deux points morts que l'on rencontre pendant le pédalage. Tout ceci dépend de l'angle formé par les manivelles par rapport aux différentes orientations du plateau.
2 - Éviter que la roue n'ait une inertie trop faible lors de la rotation, si l'on ne désire pas que le rendement baisse trop. En effet, une roue légère dispose d'une basse inertie de rotation initiale et peut procurer, d'emblée, une sensation de facilité dans le pédalage avec des accélérations initiales considérables. Cependant, les effets positifs initiaux découlant de l'équipement de roues légères peuvent se retourner rapidement contre le cycliste, lequel devra prolonger l'effort physique pour maintenir la vitesse facilement atteinte au début. En d'autres termes, une roue légère n'emmagasine pas suffisamment d'énergie cinétique pour pouvoir en restituer (énergie potentielle) par la suite, et si la forme physique du cycliste n'est pas parfaite, cela peut entraîner des conséquences négatives considérables.

L'invention se fonde justement sur cette deuxième ligne de recherche.

Conséquemment, la présente invention part de la constatation selon laquelle, s'il est vrai qu'un poids global excessif du système bicyclette/cycliste constitue en général un facteur négatif, notamment en montée, il existe cependant également des poids qui, s'ils sont adéquatement distribués sur la bicyclette et, en particulier, sur la jante, peuvent améliorer de façon considérable les rendements du pédalage dans des situations particulières.

La présente invention se fonde essentiellement sur l'utilisation de masses centrifuges fixées aux jantes de la bicyclette. D'un point de vue statique, ces masses centrifuges peuvent conduire à une augmentation du poids de la bicyclette de 60 à 80 grammes par roue.

Si ces masses centrifuges, qui représentent des appendices alaires profilés, sont fixées sur des roues légères ayant une basse inertie, d'un point de vue dynamique, ces masses (en raison des forces centrifuges qui se développent) appliquent une force sur l'axe de la jante (de l'intérieur vers l'extérieur). De telles masses contribuent, par conséquent, à diminuer la perte de tension due aux différentes sollicitations latérales appliquées aux moyeux.

À des vitesses réduites, la mobilité du moyeu est augmentée de manière significative par l'intermédiaire du maintien d'un rayon utile de progression (diminution de la déflexion verticale au moyen d'un gain en rigidité). Les routes accidentées de haute montagne ne constituent plus un problème, et le confort de la bicyclette augmente de manière considérable. La bicyclette réagit bien aux démarrages rapides et, quand la vitesse augmente, la roue se durcit encore, permettant ainsi une meilleure tenue de route dans les descentes.

La forme des masses dynamiques et leur poids, sont des facteurs qui contribuent à améliorer la tenue de la roue sur l'axe de symétrie, et, par conséquent, la qualité de la performance fournie par le pédalier est optimale et la déformation latérale se révèle être réduite.

Les passages par les points morts (supérieur et inférieur) s'effectuent facilement et le cycliste utilise moins d'énergie pour maintenir le pédalage.

D'autre part, comme tout le monde sait, l'utilisation pendant des compétitions (par exemple, pendant des compétitions chronométrées (appelées contre-la-montre)) de roues pleines à la structure composite ultra-rigide a permis d'augmenter les performances globales de la bicyclette. Ce nonobstant, la sensibilité des roues au vent latéral représente un handicap important, et si les conditions climatiques ne sont pas bonnes, leur utilisation pourrait se révéler être dangereuse.

Pour ce genre de courses, il serait possible de continuer à utiliser des roues pourvues de rayons traditionnels, beaucoup moins sensibles au vent, avec des masses centrifuges moins hautes mais, dans un même temps, plus lourdes de sorte que la rigidité requise soit conférée à la roue.

Il serait possible de faire varier, de manière modulable, la forme des masses centrifuges et leurs poids en fonction du type de courses, en montagne, en plaine, ou chronométrées (appelées courses contre-la-montre).

Les matériaux utilisés pourraient être des matériaux composites carbone/Kevlar™, ou d'autres fibres qui ont démontré posséder une bonne résistance à la traction.

Certaines matières plastiques, telles que, par exemple, l'ABS (acrylonitrile-butadiène-styrène), permettent de diminuer les coûts et de favoriser la diffusion de tels dispositifs.

Pour ces applications, des jantes conçues de manière spécifique sont nécessaires, car la présente invention consiste également en un système d'ancrage des masses centrifuges. La glissière pour les masses centrifuges peut être réalisée dans l'épaisseur de la jante (glissière négative), ou un système à rail peut être adopté (glissière positive).

Dans tous les cas, les masses centrifuges ne seront pas collées à la jante mais poussées par glissement. Ce point est important, car il permet à l'ensemble du système de répartir de façon adéquate les pressions exercées sur la surface interne de la jante.

EXPOSÉ DE L'INVENTION

En conséquence, l'objectif de la présente invention est de réaliser un équipement pour une roue de bicyclette qui n'a pas les inconvénients précédemment décrits et, dans un même temps, sont facilement réalisables et à un coût réduit.

DESCRIPTION SOMMAIRE DES DESSINS

Pour une meilleure compréhension de la présente invention, une forme de réalisation de préférence est décrite ci-dessous, uniquement à titre d'exemple non-limitatif et en faisant référence aux dessins joints, sur lesquels :

- la figure 1 illustre schématiquement une vue frontale d'une première forme de réalisation d'un équipement selon la présente invention ;
- la figure 2 illustre une vue tridimensionnelle d'une deuxième forme de réalisation d'un équipement selon la présente invention ;
- la figure 3 illustre une vue frontale de la jante de la figure 2 ; et
- la figure 4 illustre une vue tridimensionnelle de certains détails agrandis d'une jante pourvue au minimum d'une partie de l'équipement, comme illustré sur les figures 2 et 3.

MEILLEURE MANIÈRE DE RÉALISER L'INVENTION

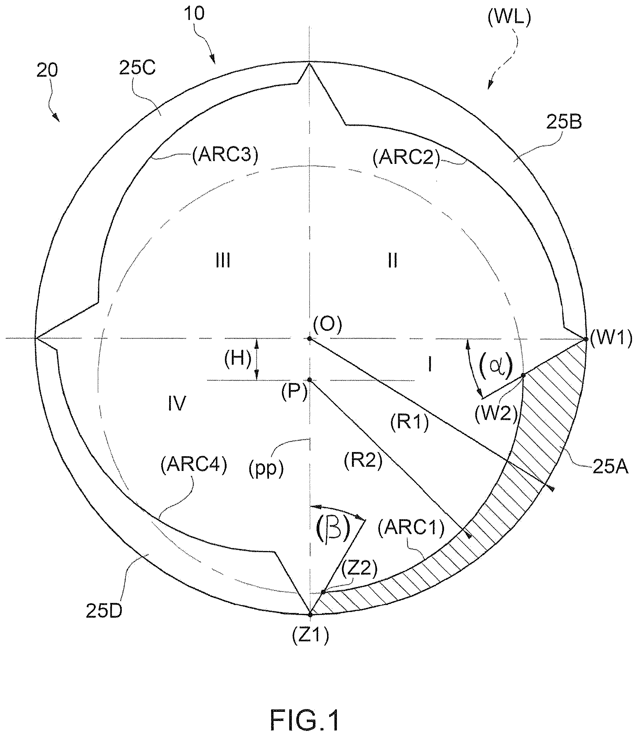

Sur la figure 1, une jante de bicyclette pourvue d'un équipement 20 réalisé selon les enseignements de la présente invention, a été indiquée, dans son ensemble, par le nombre 10.

La jante 10 fait partie, comme tout le monde sait, d'une roue (WL) (non-illustrée) comprenant à son tour également une chambre à air recouverte d'un pneumatique (non-illustrés). La roue (WL) est également pourvue éventuellement d'une pluralité de rayons, de type connu et non-illustré, qui raccordent physiquement la jante 10 à un moyeu (non-illustré).

Dans la première forme de réalisation illustrée sur la figure 1, l'équipement 20 comprend quatre appendices alaires profilés 25A, 25B, 25C et 25D, chacun desquels occupe un quadrant respectif I, II, III et IV de la jante 10.

Chaque appendice alaire profilé 25A, 25B, 25C et 25D est plat et peut être réalisé de façon avantageuse à partir de la découpe d'une tôle.

Le profil interne de chaque appendice alaire profilé 25A, 25B, 25C et 25D présente les caractéristiques géométriques suivantes en référence au rayon interne (R1) de la jante 10 :

$$(R2) = 0,6 \div 0,8 \ (R1) \ ;$$

$$(H) = 0{,}1 \div 0{,}2 \ (R1) \ ;$$

$$(\alpha) = 20° \div 45° \ ;$$

$$(\beta) = 20° \div 45°.$$

Ces valeurs optimales ont été obtenues au moyen de modélisations numériques qui ont été élaborées électroniquement par un ordinateur et, de plus, ces premières ont été confirmées à l'aide d'expérimentations.

Il faut prendre en considération le premier quadrant I, délimité par les points (W1) et (Z1) qui sont tracés sur la circonférence de la jante 10.

Maintenant, en se déplaçant du point (O), centre de la jante 10, le long de la perpendiculaire (pp) vers un point (P) à une distance (H) du susdit point (O), il est possible de tracer un arc (ARC1) de rayon (R2) (se référer aux indications ci-dessus).

Du point (W1), on détache un angle (α) compris entre 20° et 45° (se référer aux indications ci-dessus). De cette manière, on trace un point (W2) sur l'arc (ARC1).

D'une façon analogue, on détache un angle (β) entre 20° et 45° (se référer aux indications ci-dessus) du point (Z1). De cette manière, on trace un point (Z2) sur l'arc (ARC1).

Il faut, incidemment, remarquer que les angles (α) et (β) peuvent présenter des valeurs identiques ou différentes l'une de l'autre.

En conséquence, les points (W1), (W2), (Z2) et (Z1) délimitent l'appendice alaire profilé 25A, dont la zone a été mise en évidence en hachuré.

La même opération peut être réalisée pour les quadrants II, III et IV en traçant, ainsi, des arcs respectifs (ARC2), (ARC3) et (ARC4), auxquels correspondent des appendices alaires profilés respectifs 25B, 25C et 25D (figure 1).

Les appendices alaires profilés 25A, 25B, 25C et 25D peuvent être réalisés en une seule pièce avec la jante 10 ou peuvent être fixés à celle-ci, par exemple, au moyen d'un accouplement "en queue d'aronde". Ces appendices alaires profilés 25A, 25B, 25C et 25D créent un effet volant sur la roue (WL).

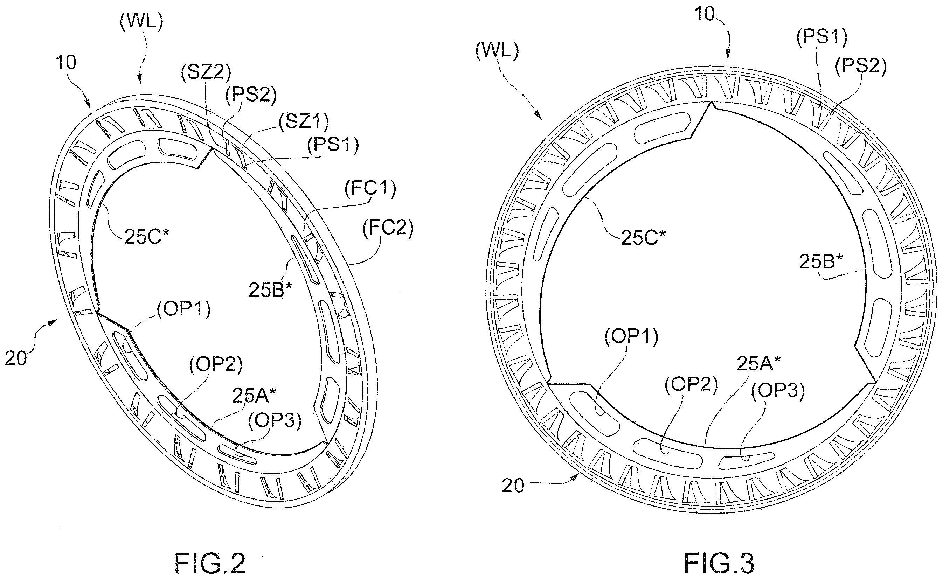

Dans la deuxième forme de réalisation illustrée sur les figures 2 et 3, les appendices alaires profilés 25A*, 25B* et 25C* sont au nombre de trois (au lieu de quatre, comme dans la première forme de réalisation de la figure 1) et ont été décalés l'un par rapport à l'autre de 120°.

Par ailleurs, comme illustré toujours sur les figures 2 et 3, dans cette forme de réalisation, chaque appendice alaire profilé 25A*, 25B* et 25C* peut être pourvu d'une ou de plusieurs ouvertures (OP1), (OP2) et (OP3) afin d'éviter ledit "effet voile" dû à la présence de vents forts latéraux. Ces ouvertures (OP1), (OP2) et (OP3) remplissent une double fonction :

a) elles créent une portance contrôlée et alternative pour mieux contraster les effets des vents latéraux ; et

b) en intervenant sur leur dimension, il est possible de faire varier l'inertie des roues pour les adapter aux différentes courses cyclistes.

Dans ces deux formes de réalisation, le poids des appendices alaires profilés (25A, 25B, 25C, 25D ; 25A*, 25B*, 25C*) est avantageusement compris entre 60 g et 80 g par roue.

Par ailleurs, selon une autre forme de réalisation de la présente invention illustrée sur les figures 2, 3 et 4, un certain nombre de passages (PS1) et (PS2) ont été réalisés sur le corps de la jante 10.

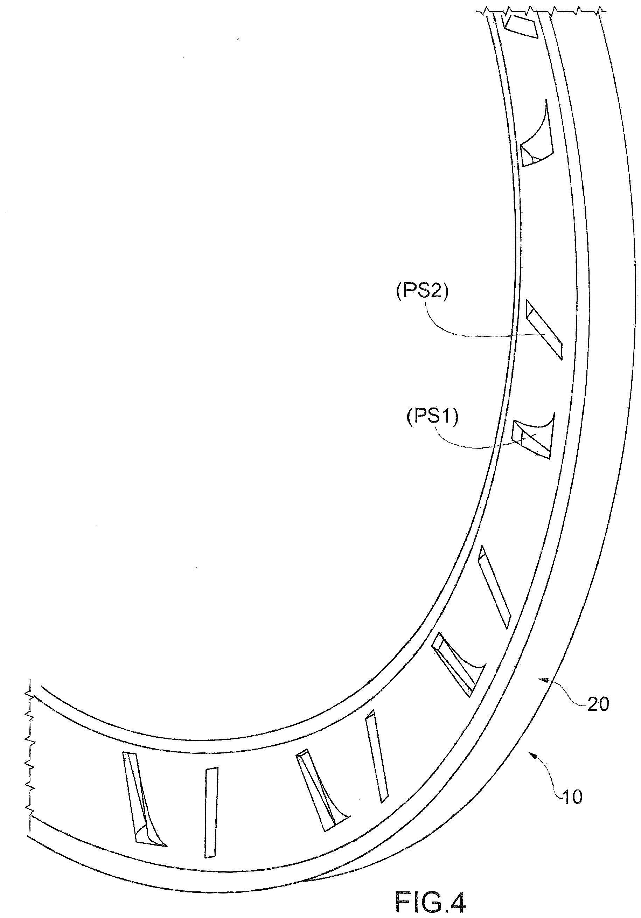

Comme illustré plus dans les détails sur la figure 4, chacun des passages (PS1) et (PS2) présente un profil interne tridimensionnel conçu selon le calque d'une portion d'un profil alaire, notamment, d'un profil alaire pour avions.

D'une manière avantageuse, mais pas nécessairement, le profil alaire est de type NACA.

D'une autre façon, sur chacune des deux faces latérales (FC1) et (FC2) de la jante 10, les sections d'entrée (SZ1) des passages de type (PS1), sont insérées par intercalation avec les sections de sortie (SZ2) des passages de type (PS2) (figure 2).

En d'autres termes, de manière avantageuse, mais pas nécessairement, les passages de type (PS1) et les passages de type (PS2) présentent la même forme que celle d'un calque de ce même profil alaire ayant une forme fuselée.

Par conséquent, pour les passages de type (PS1), c'est comme si le profil alaire "entrait" par la face latérale (FC1) de la jante 10 et "sortait" par la face latérale (FC2) placée de l'autre côté de cette même jante 10. Au contraire, pour les passages de type (PS2), c'est comme si le profil alaire "entrait" par la face latérale (FC2) de la jante 10 et "sortait" par la face latérale (FC1) placée de l'autre côté de cette même jante 10.

Cette alternance avantageuse des passages (PS1) et (PS2) permet d'évacuer le surcroît de vent qui arrive à la fois par la droite et par la gauche à 15°, 20°, 30° et 40°.

De plus, en concevant de manière adéquate les passages (PS1) et (PS2) comme des tubes de venturi, il est ainsi possible de créer une accélération naturelle de la roue.

Dans ce cas également, les "entrées" et les "sorties" des tubes de venturi peuvent être insérées par intercalation les unes avec les autres de la manière précédemment illustrée.

La forme, le nombre et la longueur des passages (PS1) et (PS2) peuvent être choisis de façon à atténuer les effets négatifs découlant des susdits vents latéraux.

Les principaux avantages de l'équipement pour une roue de bicyclette, représentant l'objet principal de la présente invention, sont les suivants :

- le passage par les points morts (supérieur et inférieur) s'effectue facilement et le cycliste utilise moins d'énergie pour continuer à pédaler ;
- la roue, en fonction du poids et/ou de la forme des appendices alaires profilés, se raidit de la manière désirée par le concepteur de projets pour adapter la bicyclette aux différentes courses (plaine, montagne, chronométrée (appelées contre-la-montre), etc...), et
- la roue devient beaucoup plus stable en cas de vent latéral fort.

**Revendications**

1. Équipement (20) pour une roue (WL) d'une bicyclette; équipement comprenant au minimum un appendice alaire profilé (25A, 25B, 25C, 25D ; 25A*, 25B*, 25C*) et une jante (10), l'appendice alaire profilé (25A, 25B, 25C, 25D ; 25A*, 25B*, 25C*) conçu pour être fixé à la surface interne de la jante (10) de la roue (WL) même;

   équipement **caractérisé par le fait que** le profil interne de l'appendice alaire profilé (25A, 25B, 25C, 25D; 25A*, 25B*, 25C*) présente les caractéristiques géométriques suivantes en référence au rayon interne (R1) de la jante (10) :

$$(R2) = 0,6 \div 0,8 \ (R1);$$

   où (R2) est le rayon de un arc (ARC1) définissant l'appendice alaire profilé (25A, 25B, 25C, 25D; 25A*, 25B*, 25C*), et où (R1) est le rayon interne de la jante (10);
   (H) = 0,1 ÷ 0,2 (R1); où (H) est la distance entre un point (0) centre de la jante (10), et un point (P) centre de l'arc (ARC1);
   et en prenant un quadrant de la jante (10) délimité par des points (W1), (Z1),
   et en détachant du point (W1) un angle (α) = 20° ÷ 45° on trace un point (W2) sur l'arc (ARC1);
   et en détachant du point (Z1) un angle (β) = 20° ÷ 45° on trace un point (Z2) sur l'arc (ARC1); les points (W1), (W2), (Z2), (Z1), délimitant l'appendice alaire profilé (25A, 25B, 25C, 25D ; 25A*, 25B*, 25C*).

2. Équipement (20) selon la revendication 1, **caractérisé par le fait qu'**au minimum une ouverture passante ((0P1), (0P2) et (0P3)) est prévue sur ledit au minimum un appendice alaire profilé (25A, 25B, 25C, 25D; 25A*, 25B*, 25C*).

3. Équipement (20) selon l'une quelconque des revendications précédentes, **caractérisé par le fait que** ledit au minimum un appendice alaire profilé (25A, 25B, 25C, 25D ; 25A*, 25B*, 25C*) est réalisé d'une seule pièce avec ladite jante (10), ou ledit au minimum un appendice alaire profilé (25A, 25B, 25C, 25D ; 25A*, 25B*, 25C*) est fixé ladite jante (10) au moyen d'un accouplement "en queue d'aronde".

4. Équipement (20) selon l'une quelconque des revendications précédentes, **caractérisé par le fait que** le poids dudit au minimum un appendice alaire profilé (25A, 25B, 25C, 25D ; 25A*, 25B*, 25C*) est compris entre 60 grammes et 80 grammes par roue.

5. Équipement (20) selon l'une quelconque des revendications précédentes, **caractérisé par le fait qu'**il comprend au minimum un passage ((PS1) et (PS2)) réalisé sur le corps de ladite jante (10).

6. Équipement (20) selon la revendication 5, **caractérisé par le fait que** ledit au minimum un passage ((PS1) et (PS2)) présente un profil interne tridimensionnel conçu selon une portion d'un profil alaire, notamment, d'un profil NACA.

7. Équipement (20) selon la revendication 5, **caractérisé par le fait que** ledit au minimum un passage ((PS1) et (PS2)) présente un profil interne tridimensionnel conçu selon un tube de venturi.

8. Équipement (20) selon la revendication 6 ou la revendication 7, **caractérisé par le fait que** sur chacune des deux faces latérales ((FC1) et (FC2)) de ladite jante (10), les sections d'entrée des portions des profils alaires, ou des tubes de venturi, sont insérées par intercalation avec les sections de sortie des portions des profils alaires mêmes, ou des tubes de venturi mêmes.

**Patentansprüche**

1. Vorrichtung (20) für ein Laufrad (WL) eines Fahrrads, wobei die Vorrichtung mindestens einen profilierten Flügelansatz (25A, 25B, 25C, 25D; 25A*, 25B*, 25C*) und eine Felge (10) aufweist, wobei der profilierte Flügelansatz (25A, 25B, 25C, 25D; 25A*, 25B*, 25C*) dazu bestimmt ist, an der Innenseite der Felge (10) des Laufrads (WL) befestigt zu werden;
   **dadurch gekennzeichnet, dass** das Innenprofil des profilierten Flügelansatzes (25A, 25B, 25C, 25D; 25A*, 25B*, 25C*) die folgenden geometrischen Eigenschaften in Bezug auf den Innenradius (R1) der Felge (10) aufweist:

$$(R2) = 0,6 \div 0,8 \ (R1);$$

   wobei (R2) der Radius eines Bogens (ARC1) ist, der den profilierten Flügelansatz (25A, 25B, 25C, 25D; 25A\*, 25B\*, 25C\*) definiert, und wobei (R1) der Innenradius der Felge (10) ist;

$$(H) = 0{,}1 \div 0{,}2 \ (R1);$$

wobei (H) der Abstand zwischen einem Mittelpunkt (0) der Felge (10) und einem Mittelpunkt (P) des Bogens (ARC1) ist;
wobei ein Quadrant der Felge (10) durch die Punkte (W1), (Z1) begrenzt wird,
wobei ausgehend vom Punkt (W1) unter einem Winkel (a) = 20° ÷ 45° ein Punkt (W2) auf dem Bogen (ARC1) erreicht wird;
wobei ausgehend vom Punk (Z1) unter einem Winkel (3) = 20° ÷ 45° ein Punkt (Z2) auf dem Bogen (ARC1) erreicht wird; und
wobei die Punkte (W1), (W2), (Z2), (Z1) den profilierten Flügelansatz (25A, 25B, 25C, 25D; 25A\*, 25B\*, 25C\*) begrenzen.

2. Vorrichtung (20) nach Anspruch 1, **dadurch gekennzeichnet, dass** mindestens eine Durchlassöffnung ((0P1), (0P2) und (0P3)) an dem mindestens einen profilierten Flügelansatz (25A, 25B, 25C, 25D; 25A\*, 25B\*, 25C\*) vorgesehen ist.

3. Vorrichtung (20) nach einem der vorstehenden Ansprüche, **dadurch gekennzeichnet, dass** die mindestens eine profilierte Flügelansatz (25A, 25B, 25C, 25D; 25A\*, 25B\*, 25C\*) einstückig mit der Felge (10) ausgebildet ist, oder der mindestens eine profilierte Flügelansatz (25A, 25B, 25C, 25D; 25A\*, 25B\*, 25C\*) an der Felge (10) mittels einer Schwalbenschwanzverbindung befestigt ist.

4. Vorrichtung (20) nach einem der vorhergehenden Ansprüche, **dadurch gekennzeichnet, dass** das Gewicht des mindestens einen profilierten Flügelansatzes (25A, 25B, 25C, 25D; 25A\*, 25B\*, 25C\*) zwischen 60 Gramm und 80 Gramm pro Rad liegt.

5. Vorrichtung (20) nach einem der vorhergehenden Ansprüche, **dadurch gekennzeichnet, dass** sie mindestens einen Durchlass ((PS1) und (PS2)) aufweist, der auf dem Körper der Felge (10) ausgebildet ist.

6. Vorrichtung (20) nach Anspruch 5, **dadurch gekennzeichnet, dass** der mindestens eine Durchlass ((PS1) und (PS2)) ein dreidimensionales Innenprofil aufweist, das entsprechend einem Teil eines Flügelprofils, insbesondere eines NACA-Profils, gestaltet ist.

7. Vorrichtung (20) nach Anspruch 5, **dadurch gekennzeichnet, dass** der mindestens eine Durchlass ((PS1) und (PS2)) ein dreidimensionales Innenprofil aufweist, das nach einem Venturirohr gestaltet ist.

8. Vorrichtung (20) nach Anspruch 6 oder 7, **dadurch gekennzeichnet, dass** auf jeder der beiden Seitenflächen ((FC1) und (FC2)) der Felge (10) die Einlassabschnitte der Teile der Flügelprofile oder der Venturirohre durch Einfügen in die Auslassabschnitte der Teile der Flügelprofile selbst oder der Venturirohre selbst eingefügt sind.

**Claims**

1. Equipment (20) for a wheel (WL) of a bicycle, which equipment comprises at least one profiled wing-shaped projection (25A, 25B, 25C, 25D; 25A\*, 25B\*, 25C\*) and a rim (10), the profiled wing-shaped projection (25A, 25B, 25C, 25D; 25A\*, 25B\*, 25C\*) being designed to be secured to the inner surface of the rim (10) of the wheel (WL) itself,
which equipment is **characterised in that** the inner profile of the profiled wing-shaped projection (25A, 25B, 25C, 25D; 25A\*, 25B\*, 25C\*) has the following geometrical characteristics with reference to the inner radius (R1) of the rim (10):

$$(R2) = 0.6 \div 0.8 \ (R1);$$

where (R2) is the radius of an arc (ARC1) defining the profiled wing-shaped projection (25A, 25B, 25C, 25D; 25A\*, 25B\*, 25C\*) and where (R1) is the inner radius of the rim (10);
(H) = 0.1 ÷ 0.2 (R1); where (H) is the distance between a centre point (0) of the rim (10) and a centre point (P) of the arc (ARC1);
and taking a quadrant of the rim (10) delimited by points (W1), (Z1),
and, by removing from the point (W1) an angle (α) = 20° ÷ 45°, a point (W2) is drawn on the arc (ARC1);
and, by removing from the point (Z1) an angle (β) = 20° ÷ 45°, a point (Z2) is drawn on the arc (ARC1); the points (W1), (W2), (Z2), (Z1) delimiting the profiled wing-shaped projection (25A, 25B, 25C, 25D; 25A\*, 25B\*, 25C\*).

2. Equipment (20) according to claim 1, **characterised in that** at least one through-opening ((OP1), (OP2) and (OP3)) is provided on said at least one profiled wing-shaped projection (25A, 25B, 25C, 25D; 25A\*, 25B\*, 25C\*).

3. Equipment (20) according to any one of the preceding claims, **characterised in that** said at least one profiled wing-shaped projection (25A, 25B, 25C, 25D; 25A\*, 25B\*, 25C\*) is integral with said rim (10), or said at least one profiled wing-shaped projection (25A, 25B, 25C, 25D; 25A*, 25B*, 25C*) is attached to said rim (10) by means of a "dovetail" coupling.

4.  Equipment (20) according to any one of the preceding claims, **characterised in that** the weight of said at least one profiled wing-shaped projection (25A, 25B, 25C, 25D; 25A*, 25B*, 25C*) is comprised between 60 grams and 80 grams per wheel.

5.  Equipment (20) according to any one of the preceding claims, **characterised in that** it comprises at least one passage ((PS1) and (PS2)) formed on the body of said rim (10).

6.  Equipment (20) according to claim 5, **characterised in that** said at least one passage ((PS1) and (PS2)) has a three-dimensional inner profile designed as a portion of a wing-shaped profile, in particular of a NACA profile.

7.  Equipment (20) according to claim 5, **characterised in that** said at least one passage ((PS1) and (PS2)) has a three-dimensional inner profile designed as a Venturi tube.

8.  Equipment (20) according to claim 6 or claim 7, **characterised in that** on each of the two side faces ((FC1) and (FC2)) of said rim (10), the inlet sections of the portions of the wing-shaped profiles, or of the Venturi tubes, are intercalated with the outlet sections of the portions of the same wing-shaped profiles, or of the same Venturi tubes.

FIG.1

FIG.3

FIG.2

(PS2)

(PS1)

20

10

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 735976 A
- US 2272801 A
- DE 4416796 A
- US 20080174166 A
- DE 102010034500 A
- EP 0808728 A
- DE 8912607 U
- US 5246275 A
- CN 201385544 Y
- US 2007200422 A
- US 20080174168 A
- JP 2008127001 A
- US 2009179480 A